Europäisches Patentamt

European Patent Office

Office européen des brevets

(11) Veröffentlichungsnummer: **0 013 046
B1**

# (12) EUROPÄISCHE PATENTSCHRIFT

(45) Veröffentlichungstag der Patentschrift:
25.11.81

(51) Int. Cl.³: **B 29 D 7/24**

(21) Anmeldenummer: 79200752.8

(22) Anmeldetag: 11.12.79

(54) Verfahren zum simultanen biaxialen Recken einer Folie aus Kunststoff und Vorrichtung zur Durchführung des Verfahrens.

(30) Priorität: 11.12.78 DE 2853398

(43) Veröffentlichungstag der Anmeldung:
09.07.80 Patentblatt 80/14

(45) Bekanntmachung des Hinweises auf die Patenterteilung:
25.11.81 Patentblatt 81/47

(84) Benannte Vertragsstaaten:
AT BE CH DE FR GB IT LU NL SE

(56) Entgegenhaltungen:
DE-B-1 088 703
DE-B-1 274 337
US-A-3 123 854
US-A-3 502 766
US-A-3 632 728

(73) Patentinhaber: UNILEVER NV, Burgemeester 's Jacobplein 1, NL-3000 DK Rotterdam (NL)

(84) Benannte Vertragsstaaten: BE CH DE FR IT LU NL SE AT

(73) Patentinhaber: UNILEVER PLC, Unilever House Blackfriars, London EC4 (GB)

(84) Benannte Vertragsstaaten: GB

(72) Erfinder: Aufsess, Friedrich Freiherr von und zu, Oberer Schulweg 13, D-8550 Forchheim (DE)
Erfinder: Huxhorn, Günter, Lindenanger 30, D-8551 Kirchehrenbach (DE)
Erfinder: Pohl, Hans, Untere Keller Strasse 22, D-8550 Forchheim (DE)
Erfinder: Sasse, Wolfgang, Johannesstrasse 12, D-8521 Bubenreuth (DE)

(74) Vertreter: Dries, Antonius Johannes Maria et al, Unilever N.V. Patent Division P.O. Box 137, NL-3130 AC Vlaardingen (NL)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zum simultanen biaxialen Recken einer Folie aus Kunststoff und Vorrichtung zur Durchführung des Verfahrens

Die Erfindung betrifft ein Verfahren zum simultanen biaxialen Recken einer flachen Folienbahn aus Kunststoff, vorzugsweise aus Polypropylen, in einer Reckvorrichtung, in der die Ränder der flachen Folienbahn durch Kluppen gehalten werden, die mittels Gewindespindeln angetrieben sind, wobei wenigstens ein Teil der Reckung in Längsrichtung mittels progressiver Steigung der Gewindespindeln simultan mit wenigstens einem Teil der Querreckung erfolgt, und die Vorrichtung hierzu.

Ein derartiges Verfahren wird in der amerikanischen Patentschrift 3 123 854 beschrieben. In dieser Patentschrift wird eine Reckvorrichtung beschrieben, in der die Ränder einer flachen Folienbahn durch Kluppen gehalten werden, die mittels Gewindespindeln angetrieben sind, wobei insbesondere laut Spalte 5, Zeilen 50 bis 69, die Gewindespindeln am Anfang und am Ende über einen Gewindegang eine gleichbleibende und dazwischen eine progressive Steigung zeigen. Mit dieser Vorrichtung ist es jedoch nicht möglich, nach dem Recken die Folie zu schrumpfen.

Es ist bekannt, daß gereckte Folienbahnen dadurch verbessert werden können, daß sie nach dem Recken ein wenig geschrumpft werden, wobei das Schrumpfen üblicherweise in der Thermofixierzone und nur in Querrichtung erfolgt. Für das Recken einer Polyamid-Folie in einer Vorrichtung, in der die Folienränder mittels eines zwischen zwei Schienen geführten Gelenkförderers erfaßt werden, wurde auch schon beschrieben, die Folienbahn nach dem simultanen, biaxialen Recken zunächst in Querrichtung und anschließend in Längsrichtung zu schrumpfen. Ein solcher Gelenkförderer ist jedoch konstruktiv sehr aufwendig und zur Erreichung von Reckgraden von 1 : 7 und mehr in jeder der beiden Reckrichtungen weniger geeignet als Gewindespindeln, die die Ränder der Folienbahn ergreifende Kluppen antreiben.

Ein Schrumpfen der Folie nach deren Recken ist beispielsweise notwendig, um ein sogenanntes Kaltschrumpfen der Folie in aufgewickeltem Zustand bei Raumtemperatur zu verhindern. Das Kaltschrumpfen wurde insbesondere bei Polypropylen-Folien innerhalb einiger Stunden nach der Reckung beobachtet und scheint auf einer Nachkristallisation der Folien zu beruhen. Ein nachträgliches Schrumpfen der Folienbahn ist insbesondere in der Maschinenlaufrichtung, in der die Folienbahn in Längsrichtung gereckt wird, nachteilig, da die Folienbahn in dieser Richtung in einer Länge von z. B. 10 000 m aufgewickelt wird.

Der Erfindung liegt die Aufgabe zugrunde, ein Verfahren aufzuzeigen, das eine Schrumpfung der Folienbahn insbesondere in Längsrichtung auch nach der Erreichung eines hohen Reckgrades ermöglicht und hierfür auch eine verbesserte Vorrichtung zu entwickeln.

Die Aufgabe wird dadurch gelöst, daß in einer Reckvorrichtung, in der die Ränder der flachen Folienbahn durch Kluppen oder ähnliche Greiforgane gehalten werden und in der die Kluppen mittels Gewindespindeln angetrieben sind, wobei wenigstens ein Teil der Reckung in Längsrichtung mittels progressiver Steigung der Gewindespindeln simultan mit wenigstens einem Teil der Querreckung, die durch eine divergierende Anordnung der Gewindespindeln erzielt wird, erfolgt, nach der Erfindung die Folienbahn in Längsrichtung um bis zu 10%, vorzugsweise 3 bis 5% über den in der fertigen Folie gewünschten Reckgrad in Längsrichtung hinaus gereckt und im Anschluß an die in Längsrichtung erfolgte Reckung auf den in der fertigen Folie gewünschten Reckgrad in Längsrichtung durch die Führung der Kluppen in einer degressiven Gewindesteigung geschrumpft wird. Vorteilhafterweise erfolgt gleichzeitig mit dem Schrumpfen der Folienbahn in Längsrichtung auch eine Veränderung ihrer Abmessung in der Querrichtung. Dies kann z. B. durch beiderseits der Folienbahn in Maschinenlaufrichtung konvergierend angeordnete Gewindespindeln mit degressiver Steigung erfolgen, die ein Schrumpfen der Folienbahn in beiden Richtungen bewirken.

In einer bevorzugten Ausführung wird das Schrumpfen der Folienbahn in Längsrichtung ausgeführt, während die Folienbahn noch weiter in Querrichtung gereckt wird. Das Schrumpfen in Längsrichtung erfolgt hierbei bei der Recktemperatur. Das Schrumpfen in Längsrichtung kann verhältnismäßig gering sein, da das gleichzeitige weitere Recken in Querrichtung ebenfalls dazu beiträgt, die in der Folienbahn insbesondere infolge der Längsreckung enthaltenen Spannungsspitzen zu verringern.

Eine erfindungsgemäße Vorrichtung zur Durchführung des bevorzugten Verfahrens ist mit zwei zueinander divergierend angeordneten Gewindespindeln versehen, die zum simultanen biaxialen Recken der Folie wenigstens über einen Teil ihrer Länge eine progressive Steigung aufweisen, wobei am auslaufseitigen Ende der Gewindespindeln im Anschluß an den Bereich mit progressiver Steigung ein Bereich mit degressiver Steigung vorgesehen ist.

Die Gewindespindeln dieser Vorrichtung verlaufen geradlinig, so daß während des gesamten Eingriffs der an der Folie angreifenden Kluppen eine gleichmäßig ansteigende Querreckung erfolgt, die bei Polypropylen-Folien z. B. 1 : 7 oder mehr beträgt. Der infolge Steigungsdegressivität eintretende Längsschrumpf trifft dabei mit der Querreckung der Folie zusammen, wodurch die Wirkung des Längsschrumpfens bezüglich der Aufhebung der Spannungsspitzen in Längsrichtung verstärkt wird.

Eine vorteilhafte Ausgestaltung der erfindungsgemäßen Vorrichtung kann darin bestehen, daß die beiden Gewindespindeln am einlaufseitigen Ende einen Bereich mit gleichbleibender Steigung, d. h., ohne Steigungsprogression aufweisen, einen daran anschließenden Bereich mit progressiver Steigung haben und in einem dritten Bereich eine degressive Steigung besitzen.

Hierdurch wird erreicht, daß im ersten Bereich ausschließlich in Querrichtung gereckt wird. Im daran anschließenden zweiten Bereich wird simultan in beiden Achsrichtungen gereckt, wobei bei gleichem Gesamtreckverhältnis in beiden Achsrichtungen der Anteil der Längsrichtung in diesem zweiten Bereich überwiegt. Im dritten Bereich der Spindeln wird dann wieder ausschließlich quer gereckt, während in Folienlängsrichtung ein Schrumpfen der Folie durchgeführt wird.

Erfindungsgemäß beträgt der Bereich am Ende der Gewindespindeln mit degressiver Steigung maximal etwa 10%, vorzugsweise etwa 5% ihrer Gesamtlänge. Der Bereich mit degressiver Steigung erstreckt sich dabei über vorzugsweise wenigstens einen Gewindegang der Gewindespindeln.

Gemäß einer vorteilhaften Ausgestaltung der Erfindung beträgt die Steigungsdegression im Endabschnitt der Gewindespindeln 2 bis 6% vorzugsweise 3 bis 5% der im vorhergehenden Abschnitt vorgesehenen Steigungsprogression.

Als ebenfalls sehr vorteilhaft hat es sich erwiesen, wenn gemäß der Erfindung der erste Bereich der Gewindespindeln, in dem eine gleichbleibende Steigung vorgesehen ist, etwa 50% der gesamten Spindellänge einnimmt, während der Bereich mit Steigungsprogressivität etwa 40 bis 45% und der Bereich der Steigungsdegression etwa 5 bis 10% der Länge der Gewindespindeln beträgt. Mit einer Reckvorrichtung mit derart ausgebildeten Gewindespindeln kann eine Folie hergestellt werden, die bei entsprechendem Divergenzwinkel gleichen Reckgrad in Längs- und Querrichtung (z. B. je 1 : 7, das ist 1 : 49 in der Fläche) und wegen der überwiegenden Reckung in Längsrichtung am Ende der Reckzone überwiegende Festigkeitseigenschaften in Längsrichtung aufweist, und bei der die Spannungsspitzen, die bei der Weiterverarbeitung leicht zu Folienbeschädigungen führen, abgebaut sind und die keinen meßbaren Kaltschrumpf in Längsrichtung hat.

Die erfindungsgemäße degressive Steigung der Gewindespindeln an ihrem auslaufseitigen Ende kann auch bei Gewindespindeln angewendet werden, die über ihre gesamte übrige Länge eine gleichmäßige, progressive Steigung besitzen.

Während die Kluppen entlang den Spindeln von dem Gewinde der Spindeln angetrieben werden, erfolgt der Antrieb vom Ende der Spindeln an beispielsweise durch eine mit konstanter Geschwindigkeit umlaufende Mitnehmerkette. Die degressive Steigung der Gewindespindeln verzögert die Kluppen, so daß sie ohne ruckartige Beanspruchung der Folienbahn von ihren der Divergenz der Gewindespindeln entsprechend divergierenden Bewegungsrichtungen in zur Maschinenlaufrichtung etwa parallele Richtungen gelangen.

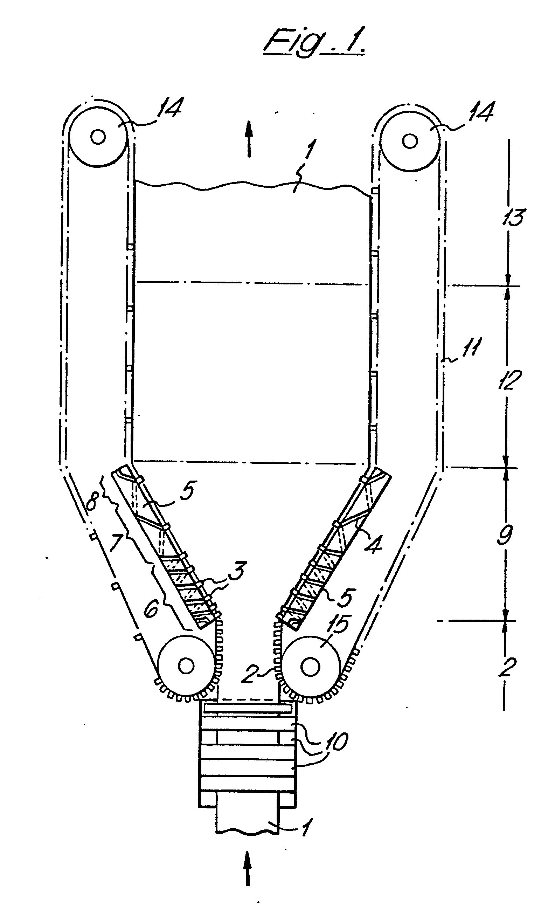

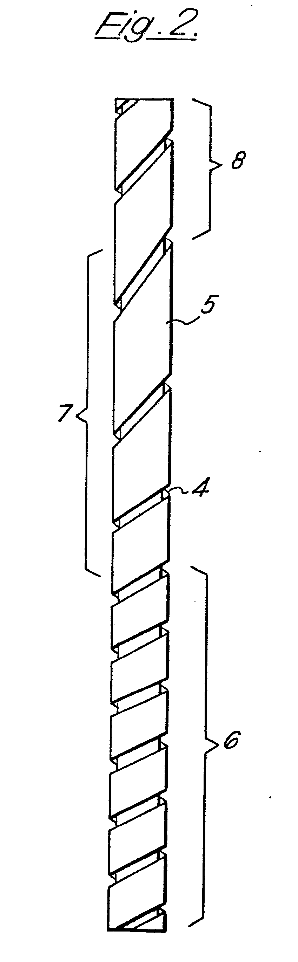

Die Erfindung ist im folgenden anhand eines Ausführungsbeispiels erläutert. Die Figuren zeigen eine schematisch dargestellte Reckvorrichtung mit zwei zueinander divergierenden Gewindespindeln (Fig. 1) und eine einzelne Gewindespindel dieser Vorrichtung (Fig. 2).

Eine flache Folienbahn 1, die z. B. mittels eines nicht dargestellten Extruders hergestellt wurde, wird über Kühl- und Heizwalzen 10 geführt und etwa auf die Recktemperatur erwärmt. Am einlaufseitigen Ende 2 der eigentlichen Reckvorrichtung wird die Folienbahn 1 an ihren Rändern von Kluppen 3 erfaßt und in die Reckzone 9 eingeführt. Die Kluppen 3 gelangen zum Eingriff in die Gewindegänge 4 von Gewindespindeln 5, die beiderseits der Reckvorrichtung zueinander divergierend angeordnet wird. Die Divergenz der Gewindespindeln 5 bewirkt ein Recken in Querrichtung über die gesamte Länge der Reckzone 9. In der Reckzone 9 kann die Temperatur der Folienbahn durch nicht dargestellte Heiz- und/oder Kühleinrichtungen auf die geeignete Recktemperatur, bei der eine thermoelastische Reckung und eine Verbesserung der Folieneigenschaften möglich ist, eingestellt werden. Die Gewindegänge 4 der beiden Spindeln 5 haben in einem ersten, etwa die Hälfte der Gesamtlänge der Spindeln 5 betragenden Bereich 6 eine gleichbleibende Steigung, wodurch die drehbar angetriebenen Spindeln 5 die Kluppen und somit auch die Folienbahn mit ihrer Anfangsgeschwindigkeit weiter transportieren, d. h. ohne eine Reckung in Längsrichtung. In einem zweiten, etwa 40% der Gesamtlänge der Spindeln betragenden Bereich 7 weist die Steigung der Gewindegänge 4 eine Progression auf, die von 1 : 1 ausgeht und ansteigt bis zu einer Längsreckung der Folienbahn von 1 : 7,35. In einem dritten, etwa 10% der Spindellänge entsprechenden Bereich 8 hat die Gewindesteigung eine Degression, die auf die Folienbahn bezogen 7,35 : 7,0 beträgt, wodurch die Folienbahn am auslaufseitigen Ende der Spindeln einen Reckgrad in Längsrichtung von 1 : 7 gegenüber der Ausgangsfolie aufweist. Die Kluppen werden in der Reckzone 9 und der anschließenden Thermofixierzone 12 an nicht dargestellten Führungsschienen geführt. Diese können in der Thermofixierzone 12 ein wenig zueinander konvergieren, um die Folienbahn gegebenenfalls auch etwas in Querrichtung zu schrumpfen. An die Thermofixierzone 12, in der die Folienbahn häufig auf eine höhere Temperatur als die Recktemperatur erhitzt wird, schließt eine Kühlzone 13 an, und anschließend wird die Folie, was nicht mehr dargestellt ist, aufgewickelt. Die Kluppen 3 werden mittels einer Transporteinrichtung 11 vom Ende der Gewindespindeln 5 durch die Thermofixierzone 12 und die Kühlzone 13 über Umlenkräder 14 zur Einlaufseite der Folienbahn 1 zurückgebracht, wo sie über Umlenkräder 15 an die Ränder der Folienbahn herangeführt werden.

In einer Vorrichtung der vorstehend beschriebenen Art, jedoch mit Spindeln von etwa 5 m Länge, die in einem solchen Winkel divergieren, daß am Ende der Reckzone eine Querreckung von etwa 1 : 8,2 erreicht wird, wurde eine Polypropylen-Folie von etwa 420 mm Breite zwischen den Kluppen 3 an der Einlaufseite auf etwa 3445 mm Breite zwischen den Kluppen am Ende der Reckzone bei Abzugsgeschwindigkeiten von 75 bis 90 m/min der auf 0,02 mm biaxial ausgereckten Folienbahn behandelt. In der Thermofixierzone 12 wurde die Folie gegebenenfalls auf einen Reckgrad von etwa 1 : 8 in Querrichtung geschrumpft. Der die Längsrichtung ergebende Abstand zwischen zwei Kluppen 3 betrug an der Einlaufseite der Gewindespindeln 5 etwa 40 mm und wurde infolge der Gewindesteigung auf maximal 302 mm vergrößert, was einer Vergrößerung des Abstandes zwischen den Kluppen in Richtung der Spindel im Verhältnis 1 : 7,55 und einer Reckung der Folienbahn in Maschinenlaufrichtung von 1 : 7,22 entspricht. Im Bereich 8 im auslaufseitigen Endabschnitt der Spindeln 5 erfolgte eine Schrumpfung der Folienbahn in Längsrichtung von etwa 3%, das ist auf einen Reckgrad von 1 : 7, bezogen auf die Ausgangsfolie, bzw. in einem Verhältnis 7,22 : 7 bezogen auf die größte Längsreckung in der Reckzone; dabei verringerte sich der Abstand der Kluppen in Richtung der Spindel auf etwa 293 mm und die Länge der degressiven Steigung des Gewindeganges betrug etwa 6% der gesamten Spindellänge. Die auf diese Weise erzeugte Schrumpfung in Längsrichtung ergab Folienbahnen, die in erkaltetem, aufgewickeltem Zustand und bei der späteren Weiterverarbeitung bei etwa Raumtemperatur kein Kaltschrumpfen mehr zeigten.

## Patentansprüche

1. Verfahren zum biaxialen Recken einer flachen Folienbahn aus Kunststoff in einer Reckvorrichtung, in der die Ränder der flachen Folienbahn (1) durch Kluppen (3) gehalten werden, die mittels Gewindespindeln (5) angetrieben sind, wobei wenigstens ein Teil der Reckung in Längsrichtung mittels progressiver Steigung der Gewindespindeln (5) simultan mit wenigstens einem teil der Querreckung erfolgt, dadurch gekennzeichnet, daß die Folienbahn (1) in Längsrichtung um bis zu 10% über den in der fertigen Folie gewünschten Reckgrad hinaus gereckt und im Anschluß an die Reckung in Längsrichtung auf den gewünschten Reckgrad in Längsrichtung durch Führung der Kluppen (3) in einer degressiven Gewindesteigung geschrumpft wird.

2. Verfahren nach Anspruch 1, dadurch gekennzeichnet, daß das Schrumpfen der Folienbahn (1) in Längsrichtung durchgeführt wird, während die Folienbahn (1) noch weiter in Querrichtung gereckt wird, wobei das Schrumpfen in Längsrichtung bei der Temperatur des Reckens erfolgt.

3. Verfahren nach Anspruch 1 oder 2, dadurch gekennzeichnet, daß die Kunststoff-Folienbahn (1) im wesentlichen aus Polypropylen besteht.

4. Verfahren nach einem der Ansprüche 1 bis 3, dadurch gekennzeichnet, daß die Folienbahn (1) in der Reckvorrichtung über die gesamte Reckzone (9) stetig bis auf einen Reckgrad von mindestens 1 : 7 quer gereckt wird und die Längsreckung der Folienbahn (1) infolge progressiver Steigung der Gewindespindeln (5) erst bei etwa 50% der Länge der Reckzone (9) beginnt und und bis 90 bis 95% der Länge der Reckzone (9) eine Reckung in Längsrichtung von mehr als 1 : 7 ergibt und am Ende der Reckzone (9) infolge degressiver Steigung der Gewindespindeln (5) auf den gewünschten Reckgrad der fertigen Folie (1) von mindestens 1 : 7 geschrumpft wird.

5. Vorrichtung zur Durchführung des Verfahrens nach einem der Ansprüche 1 bis 4, enthaltend Kluppen (3), die die Ränder der Folienbahn (1) ergreifen, und Gewindespindeln (5) zum Antrieb der Kluppen (3), die zum simultanen biaxialen Recken der Folienbahn (1) divergierend zueinander abgeordnet sind und wenigstens über einen Teil (7) ihrer Länge eine progressive Steigung aufweisen, dadurch gekennzeichnet, daß am auslaufseitigen Ende der Gewindespindeln (5) im Anschluß an den Bereich (7) der progressiven Steigung der Gewindespindeln (5) ein Bereich (8) mit einem Gewinde mit degressiver Steigung zur weiteren Führung der Kluppen (3) vorgesehen ist.

6. Vorrichtung nach Anspruch 5, dadurch gekennzeichnet, daß das Gewinde mit degressiver Steigung auf den Gewindespindeln (5) selbst an deren auslaufseitigem Endabschnitt im Bereich (8) angeordnet ist.

7. Vorrichtung nach Anspruch 6, dadurch gekennzeichnet, daß der Endabschnitt der Gewindespindeln (5) mit dem Bereich (8) mit degressiver Steigung nicht mehr als 10% der gesamten Länge der Spindeln (5) beträgt, wobei sich dieser Bereich (8) über wenigstens einen Gewindegang der Gewindespindel (5) erstreckt.

8. Vorrichtung nach Anspruch 7, dadurch gekennzeichnet, daß der Bereich (8) mit degressiver Steigung etwa 5% der gesamten Länge der Gewindespindeln (5) beträgt.

9. Vorrichtung nach einem der Ansprüche 5 bis 8, dadurch gekennzeichnet, daß die Degression der Steigung im Bereich (8) am auslaufseitigen Ende der Gewindespindeln (5) 2 bis 6% der Progression der Steigung in dem vorangehenden Bereich (7) beträgt.

10. Vorrichtung nach einem der Ansprüche 6 bis 9, dadurch gekennzeichnet, daß die Gewindespindeln (5) am einlaufseitigen Ende einen ersten Bereich (6) mit gleichbleibender Steigung über etwa 50% der Spindellänge besitzen, in einem anschließenden Bereich (7) von 40 bis 45% der Spindellänge eine progressive Steigung aufweisen und am Ende der Spindeln (5) der Bereich (8) mit degressiver Steigung 5 bis 10% der Spindellänge beträgt.

## Claims

1. Process for the biaxial stretching of a flat film web from plastics material in a stretching apparatus, in which the edges of the flat film web (1) are retained by grippers (3) driven by means of threaded spindles (5), at least part of the stretching in longitudinal direction being effected by means of a progressive pitch of the threaded spindles (5) simultaneously with at least of the transverse stretching, characterized in that the film web (1) is stretched in longitudinal direction at up to 10% in excess of the stretching degree desired in the finished film and, subsequently to the stretching in longitudinal direction, is shrunk to the desired stretching degree in longitudinal direction by guiding the grippers (3) in a degressive thread pitch.

2. Process according to claim 1, characterized in that the shrinking of the film web (1) in longitudinal direction is carried out while the film web (1) is still being further stretched in transverse direction, the shrinking in longitudinal direction being effected at the stretching temperature.

3. Process according to claim 1 or 2, characterized in that the plastics film web (1) essentially consists of polypropylene.

4. Process according to any one of claims 1 to 3, characterized in that in the stretching apparatus the film web (1) is continuously stretched over the entire stretching zone (9) to a stretching degree of at least 1 : 7 and owing to a progressive pitch of the theaded spindles (5) the longitudinal stretching of the film web (1) only begins at about 50% of the length of the stretching zone and until 90% to 95% of the length of the stretching zone (9) results in a stretch in longitudinal direction of more than 1 : 7 and at the end of the stretching zone (9), owing to a degressive pitch of the threaded spindles (5), shrinking is effected to the desired stretching degree of the finished film (1) of at least 1 : 7.

5. Apparatus for performing the process according to any one of claims 1 to 4, containing grippers (3) to engage the edges of the film web (1), and threaded spindles (5) for driving the grippers (3), which for the simultaneous biaxial stretching of the film web (1) are arranged divergent to each other and have a progressive pitch over at least part (7) of their length, characterized in that at the runoff end of the threaded spindles (5), subsequent to the area (7) of progressive pitch of the threaded spindles (5), an area (8) with a thread of degressive pitch is provided for the further guiding of the grippers (3).

6. Apparatus according to claim 5, characterized in that the thread of degressive pitch has been arranged on the threaded spindles (5) themselves at their run-off end section in the area (8).

7. Apparatus according to claim 6, characterized in that the end section of the threaded spindles (5) with the area (8) of degressive pitch comprises not more than 10% of the overall length of the spindles (5), said area (8) extending over at least one thread of the threaded spindles (5).

8. Apparatus according to claim 7, characterized in that the area (8) of degressive pitch comprises about 5% of the overall length of the threaded spindles (5).

9. Apparatus according to any one of claims 5 to 8, characterized in that the degression of pitch in the area (8) at the run-off end of the threaded spindles (5) amounts to 2 to 6% of the progression of pitch in the preceding area (7).

10. Apparatus according to any one of claims 6 to 9, characterized in that the threaded spindles (5) have at the infeed end a first area (6) of constant pitch over about 50% of the spindle length, in a subsequent area (7), comprising 40 to 50% of the spindle length, they have a progressive pitch and at the end of the spindles (5) the area (8) of degressive pitch comprises 5 to 10% of the spindle length.

## Revendications

1. Procédé pour l'étirage biaxial d'une bande de pellicule plane en matière synthétique dans un dispositif d'étirage, dans lequel les bords de la bande de pellicule plane (1) sont maintenus par des pinces (3) qui sont entraînées au moyen de tiges filetées (5), suivant lequel au moins une partie de l'étirage dans le sens longitudinal est réalisée par un pas croissant des tiges filetées (5) simultanément avec au moins une partie de l'étirage transversal, caractérisé en ce que la bande de pellicule (1) est étirée dans le sens longitudinal dans une mesure excédant jusqu'à 10% le taux d'étirage souhaité dans la pellicule finie et, après son étirage dans le sens longitudinal, elle est soumise à un retrait jusqu'au taux d'étirage souhaité dans le sens longitudinal par guidage des pinces (3) dans un filet à pas décroissant.

2. Procédé suivant la revendication 1, caractérisé en ce que le retrait de la bande de pellicule (1) est réalise dans le sens longitudinal pendant que cette bande (1) est davantage étirée dans le sens transversal, le retrait dans le sens longitudinal étant réalisé à la tmpérature de l'étirage.

3. Procédé suivant la revendication 1 ou 2, caractérisé en ce que la bande de pellicule de matière synthétique (1) est en substance en polypropylène.

4. Procédé suivant l'une quelconque des revendications 1 à 3, caractérisé en ce que la bande de pellicule (1) est étirée transversalement dans le dispositif d'étirage régulièrement sur l'ensemble de la zone d'étirage (9) jusqu'à un taux d'étirage d'au moins 1 : 7 et l'étirage longitudinal de la bande de pellicule (1) dû à une croissance du pas des tiges filetées (5) ne commence qu'à environ 50% de la longueur de la zone d'étirage (9) et donne jusqu'à 90 à 95% de la longueur de la zone (9) un étirage dans le sens longitudinal excédant 1 : 7, un retrait étant réalisé à la fin de la zone d'étirage (9) par décroissance du pas des tiges filetées (5) pour atteindre le taux d'étirage souhaité de la pellicule finie (1) qui est d'au moins 1 : 7.

5. Dispositif pour l'exécution du procédé suivant l'une quelconque des revendications 1 à 4, qui comprend des pinces (3) qui agrippent les bords de la bande de pellicule (1) et des tiges filetées (5) pour l'entraînement des pinces (3), qui sont montées divergentes l'une par rapport à l'autre pour assurer l'étirage biaxial simultané de la bande de pellicule (1) et qui présentent sur une partie (7) de leur longueur un pas croissant, caractérisé en ce qu'à l'extrémité de sortie des tiges filetées (5) après la zone (7) des tiges filetées (5) à pas croissant, est prévue une zone (8) à pas décroissant pour le guidage ultérieur des pinces (3).

6. Dispositif suivant la revendication 5, caractérisé en ce que le filet à pas dégressif est prévu sur les tiges filetées (5) à leur section d'extrémité de sortie dans la zone (8).

7. Dispositif suivant la revendication 6, caractérisé en ce que la section d'extrémité des tiges filetées (5) comportant la zone (8) à pas décroissant ne constitue pas plus de 10% de l'ensemble de la longueur des tiges (5), cette zone (8) s'étendant sur au moins un filet des tiges filetées (5).

8. Dispositif suivant la revendication 7, caractérisé en ce que la zone (8) à pas décroissant constitue environ 5% de l'ensemble de la longeur des tiges filetées (5).

9. Dispositif suivant l'une quelconque des revendications 5 à 8, caractérisé en ce que la décroissance du pas dans la zone (8) à l'extrémmité de sortie des tiges filetées (5) représente 2 à 6% de la croissance du pas dans la zone (7) précédente.

10. Dispositif suivant l'une quelconque des revendications 6 à 9, caractérisé en ce que les tiges filetées (5) présentent, à l'extrémité d'entrée, une première zone (6) à pas constant sur environ 50% de leur longueur, dans une zone suivante (7), sur 40 à 45% de leur longueur, un pas croissant et à leur autre extrémité, la zone (8), représentant 5 à 10% de leur longueur, dans laquelle le pas etst décroissant.

*Fig .1.*

# Fig. 2.